**Europäisches Patentamt**

**European Patent Office**

**Office européen des brevets**

(19)

(11) Veröffentlichungsnummer: **0 009 106**
**A1**

(12)

# EUROPÄISCHE PATENTANMELDUNG

(21) Anmeldenummer: **79102775.8**

(22) Anmeldetag: **02.08.79**

(51) Int. Cl.³: **H 04 M 17/02,** H 01 H 47/04, H 04 M 19/08

(30) Priorität: **27.09.78 CH 10068/78**

(43) Veröffentlichungstag der Anmeldung: **02.04.80** Patentblatt 80/7

(84) Benannte Vertragsstaaten: **BE CH FR GB NL**

(71) Anmelder: **AUTELCA AG, Worbstrasse 187, CH-3073 Gümligen (CH)**

(72) Erfinder: **Nyffenegger, Alfred, Unterbälliz 16, CH-3138 Uetendorf (CH)**
Erfinder: **Dubey, Pierre, Bernstrasse 41, CH-3052 Zollikofen (CH)**

(74) Vertreter: **Keller, Hartmut et al, Hartmut Keller Dr. René Keller Postfach 12, CH-3000 Bern 7 (CH)**

(54) **Schaltungsanordnung zur Erregung eines Elektromagneten in einem Münzfernsprecher.**

(57) Eine Impulserzeugungsschaltung (12) erzeugt zwei unmittelbar aufeinanderfolgende Stromimpulse (d und e). Die Amplitude und Dauer des ersten Stromimpulses (d) reichen zum Anziehen des Ankers des Elektromagneten (21) aus, die Amplitude des zweiten Stromimpulses (e) reicht lediglich zum Halten des angezogenen Ankers aus und seine Impulsdauer entspricht einer vorbestimmten Zeitdauer, während welcher der Anker in der angezogenen Stellung gehalten werden soll. Ein aus der Teilnehmerleitung (3) gespeister Speisekreis (1, 2) liefert zwei verschieden große Spannungen, wobei die größere Spannung an einem Schalttransistor (31) des den ersten Stromimpuls (d) schaltenden Teils (11) der Impulserzeugungsschaltung (12) und die kleinere Spannung, die ein Bruchteil der größeren Spannung ist, an einem Schalttransistor (14) des den zweiten Stromimpuls (e) schaltenden Teils (15) der Impulserzeugungsschaltung (12) liegt. Dadurch kann der Elektromagnet (21) mit minimalem Leistungsverbrauch aus der Teilnehmerleitung gespeist werden.

EP 0 009 106 A1

Schaltungsanordnung zur Erregung eines Elektromagneten in
einem Münzfernsprecher

Die Erfindung betrifft eine Schaltungsanordnung zur Erregung
eines Elektromagneten in einem aus der Teilnehmerleitung gespeisten Münzfernsprecher gemäss dem Oberbegriff des Patentanspruchs 1.

Die aus der Teilnehmerleitung entnehmbare, elektrische Leistung ist verhältnismässig klein und kann in ungünstigen Fällen beispielsweise lediglich einige 10 mW betragen. Daher muss bei Münzfernsprechern der Stromverbrauch jedes einzelnen Schaltungselements möglichst klein gehalten werden, wobei selbst geringfügige Stromeinsparungen für die zuverlässige Funktionsfähigkeit der Münzfernsprecher wichtig sind.

Die Erfindung geht aus von der Erkenntnis, dass die Stromverbrauchsspitzen eines Münzfernsprechers durch die Elektromagnete verursacht sind, die die Münzprüf-, Münzrückgabe- und Münzkassiereinrichtung betätigen. Dabei zieht beispielsweise der Elektromagnet der Münzkassiereinrichtung eine den Eingang des Münzkassierkanals in ihrer Ruhestellung verschliessende, schwenkbare Klappe gegen die Kraft einer Feder in eine Arbeitsstellung und hält sie während einer vorbestimmten Zeitdauer in dieser, wobei der Eingang des Münzkassierkanals freigegeben ist.

Der Erfindung liegt die Aufgabe zugrunde, eine Schaltungsanordnung zu schaffen, mit der ein Elektromagnet mit minimalem
Leistungsverbrauch aus der Teilnehmerleitung gespeist werden
kann.

Die erfindungsgemässe Lösung dieser Aufgabe ist Gegenstand
des kennzeichnenden Teils des Patentanspruchs 1.

Bei der erfindungsgemässen Schaltungsanordnung wird durch die
beiden, unmittelbar aufeinanderfolgenden, besonders bemessenen
Impulse erreicht, dass durch den Elektromagneten stets nur der
gerade erforderliche Strom, nämlich zuerst der zum Anziehen
des Ankers erforderliche und dann der zum Halten des Ankers
ausreichende Strom fliesst. Damit ist ein minimaler Stromverbrauch des Elektromagneten gewährleistet. Dies genügt aber zur
Lösung der erfindungsgemässen Aufgabe noch nicht, denn für
eine minimale Leistungsaufnahme aus der Teilnehmerleitung
kommt es nicht nur auf den Stromverbrauch des Elektromagneten
sondern auch auf die bei der Speisung des Elektromagneten aus
der Teilnehmerleitung auftretenden Verluste an. Um diese Verluste auf ein Minimum zu beschränken, versorgt der erfindungsgemässe Speisekreis die die beiden Impulse schaltenden Schaltungsteile der Impulserzeugungsschaltung mit zwei verschieden grossen Spannungen. Wenn dagegen diese beiden Schaltungsteile mit derselben Spannung versorgt werden und die Amplitude des zweiten Stomimpulses gegenüber dem ersten durch einen Widerstand herabgesetzt wird, verursacht dieser erhebliche ohmsche Verluste.

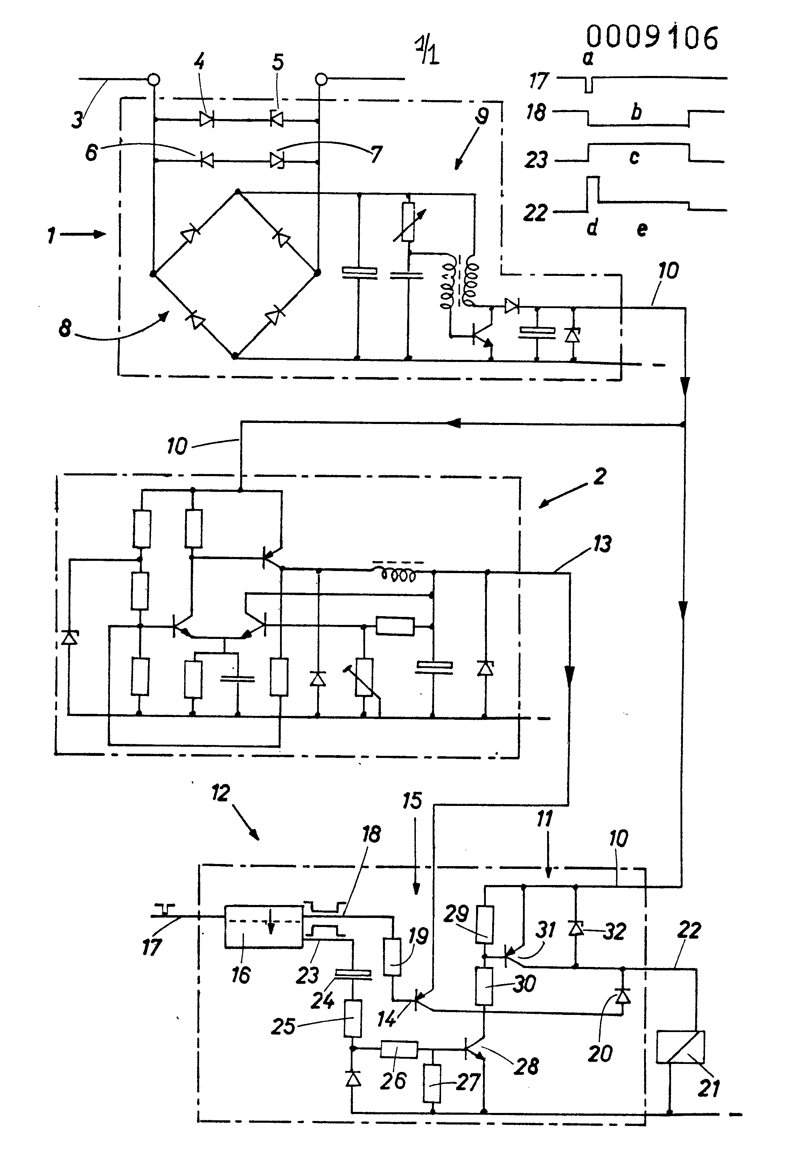

Im folgenden wird anhand der beiliegenden Zeichnung ein Ausführungsbeispiel der Erfindung näher beschrieben. Die einzige Figur zeigt ein Schema einer aus der Teilnehmerleitung gespeisten Schaltungsanordnung zur Erregung eines Elektromagneten in einem Münzfernsprecher. In der Figur sind rechts oben die in der Schaltung auftretenden Impulse dargestellt, wobei zu jedem Impuls die Bezugszahl der Leitung angegeben ist, durch welche der Impuls läuft.

Die Schaltungsanordnung hat einen aus zwei Schaltungsteilen 1 und 2 bestehenden Speisekreis. Zur Erzeugung des für die Stromaufnahme aus der Teilnehmerleitung 3 erforderlichen Spannungsabfalls ist ein Diodenpaar 4, 5 des ersten Schaltungsteils 1 in Serie in die Teilnehmerleitung 3 geschaltet.

Die Diode 4 und die Zenerdiode 5 sind entgegengesetzt gepolt und parallel zu ihnen ist ein gleiches Diodenpaar 6, 7 geschaltet, wobei die Diode 6 und die Zenerdiode 7 entgegengesetzt zu den Dioden 4 und 5 gepolt sind. Die Diodenpaare 4, 5 und 6, 7 sind an den einen Diagonalzweig einer Gleichrichter-Brückenschaltung (Graetz-Schaltung) 8 angeschlossen,
deren anderer Diagonalzweig einen Gleichspannungswandler
(Sperrwandler) 9 speist. Die Ausgangsleitung 10 des Wandlers
9, an der eine Spannung $U_1$ von etwa 25 Volt liegt, ist mit
dem Eingang des Schaltungsteils 2 und einem ersten Schaltungsteil 11 einer Impulserzeugungsschaltung 12 verbunden. Der
zweite Schaltungsteil 2 des Speisekreises ist ein Spannungsumformer mit geschalteten Transistoren, der die erste Spannung
$U_1$ in eine zweite, stabilisierte Spannung $U_2$ von 5 Volt umformt. Der Schaltungsteil 2 ist nach Art eines sog. Schaltreglers (switching regulator) aufgebaut, bei dem eine Gleichspannungsumformung und -stabilisierung mit hohem Wirkungsgrad
(im vorliegenden Fall über 70 %) mittels geschalteter Transistoren erreicht werden kann. Das Schaltungsprinzip dieses
Schaltreglers ist beispielsweise im Buch von S.W. Wagner,
"Stromversorgung elektronischer Schaltungen und Geräte", R.V.
Decker's Verlag, Homburg, 1964, Seite 493, ausführlich beschrieben. Die Ausgangsleitung 13 des Schaltungsteils 2, an
der die Spannung $U_2$ von 5 Volt liegt, ist an den Emitter eines
Schalttransistors 14 angeschlossen, der zu einem zweiten
Schaltungsteil 15 der Impulserzeugungsschaltung 12 gehört.

Die Impulserzeugungsschaltung 12 hat einen Monovibrator 16,
an dessen Eingang eine z.B. zum (nicht dargestellten) Münzprüfer des Fernsprechers führende Leitung 17 angeschlossen ist, auf die der Münzprüfer bei einer nicht annehmbaren Münze ein Auslösesignal a gibt, damit der Elektromagnet 21 die Rückgabe der Münze bewirkt. Der eine Ausgang 18 des Ausgangsimpulse b und c von $t_1$ = 200 ms Dauer abgebenden Monovibrators 16 ist über einen Widerstand 19 an die Basis des Transistors 14 angeschlossen, so dass dieser während der Dauer $t_1$ des Ausgangsimpulses b des Monovibrators 16 leitend ist. Der Kollektor des Transistors 14 ist über eine Diode 20 an eine zu einem Elektromagneten 21 führende Leitung 22 angeschlossen. Der zweite Ausgang 23 des Monovibrators 16 ist mit einem Kondensator 24 verbunden, der zusammen mit drei Widerständen 25, 26 und 27 ein CR-Glied bildet. Die Basis eines Transistors 28 ist an die Verbindung der beiden Widerstände 26 und 27 angeschlossen. Beim Aufladen des Kondensators 24 durch den Ausgangsimpuls c des Monovibrators 16 entsteht ein Spannungsabfall am Widerstand 27 und der Transistor 28 wird leitend. Ein Schalttransistor 31 ist mit seiner Basis an die Verbindung zweier im Kollektorkreis des Transistors 28 liegender Widerstände 29, 30 angeschlossen. Wenn der Transistor 28 leitend ist, so wird infolge des Spannungsabfalls am Widerstand 29 auch der Transistor 31 leitend und verbindet die Leitung 10, an der die Spannung $U_1$ liegt, mit der Anschlussleitung 22 des Elektromagneten 21. Die Zeitkonstante des CR-Glieds 24 - 27 ist so bemessen, dass der Transistor 28 bzw.

31 während einer Zeit $t_2 = 15$ ms leitend bleibt. Eine zwischen die Leitungen 10 und 22 geschaltete Zenerdiode 32 schützt den Transistor 31 vor der beim Ausschalten des Elektromagneten 21 entstehenden Selbstinduktionsspannung.

Der Anker des Elektromagneten 21 betätigt eine am Eingang des Münzrückgabekanals schwenkbar angeordnete, (nicht dargestellte) Klappe, die in ihrer Ruhestellung den Münzrückgabekanal verschliesst. Bei einer Erregung des Elektromagneten 21 zieht der Anker die Klappe gegen die Kraft einer Feder in eine Arbeitsstellung, in der sie den Eingang des Münzrückgabekanals freigibt.

Die dargestellte Schaltungsanordnung erzeugt - wie im folgenden näher erläutert - zwei unmittelbar aufeinanderfolgende Stromimpulse d und e verschiedener Dauer und Amplitude: Wenn die vom (nicht dargestellten) Münzprüfer geprüfte Münze nicht annehmbar ist, so gibt dieser ein Auslösesignal a auf die Leitung 17, welches den Monovibrator 16 auslöst. Dieser gibt an seinen beiden Ausgängen 18 und 23 je einen Ausgangsimpuls b und c von $t_1 = 200$ ms Dauer ab. Der Ausgangsimpuls b vom Ausgang 18 schaltet den Transistor 14 während der Zeit $t_1$ durch; ein erster Teil des Ausgangsimpulses c vom Ausgang 23 lädt den Kondensator 24 auf, wodurch der Transistor 28 und der Schalttransistor 31 leitend werden. Während der Zeit $t_2 = $ 15 ms, während der der Schalttransistor 31 leitend bleibt,

0009106

liegt die Spannung $U_1$ von 25 Volt an der Leitung 22 und durch den Elektromagneten 21 fliesst ein erster Stromimpuls d. Da die Spannung $U_1$ an der Leitung 22 grösser ist als die Spannung $U_2$ an der vom Transistor 14 an den Eingang der Diode 20 durchgeschalteten Leitung 13, ist die Diode 20 während der Zeit $t_2$ gesperrt. Nach Ablauf der Zeit $t_2$ ist der Kondensator 24 nahezu aufgeladen, es fliesst praktisch kein Strom mehr durch die Widerstände 25 - 27 und der Transistor 28 wird gesperrt, worauf auch der Schalttransistor 31 gesperrt wird, weil kein Strom mehr durch die Widerstände 29 und 30 fliesst. Sobald die Spannung an der Leitung 22 auf den Wert der Spannung $U_2$ von 5 Volt abgefallen ist, wird die Diode 20 leitend und vom Schaltungsteil 2 fliesst ein zweiter Stromimpuls e durch die Leitung 13, den Schalttransistor 14, die Diode 20 und den Elektromagneten 21. Der zweite Stromimpuls e schliesst unmittelbar an den ersten Stromimpuls d an und dauert so lange, bis der Schalttransistor 14 am Ende des Ausgangsimpulses b des Monovibrators 16 gesperrt wird. Die Impulsdauer des zweiten Stromimpulses e beträgt also $t_1 - t_2 = 185$ ms.

Die durch die Grösse der Spannung $U_1$ und die Zeitkonstante des CR-Glieds 24 - 27 gegebene Amplitude und Dauer des ersten Stromimpulses d reichen zum Anziehen des Ankers des Elektromagneten 21 gerade aus. Die durch die Grösse der Spannung $U_2$ gegebene Amplitude des zweiten Stromimpulses e reicht nur zum Halten des durch den ersten Stromimpuls d bereits angezogenen Ankers aus. Die im wesentlichen durch die Zeitkonstante des Monovibrators 16 gegebene Impulsdauer des zweiten Stromimpulses e ist gross genug, damit eine Münze die Klappe passieren und in den Rückgabekanal fallen kann.

Anstelle des CR-Glieds 24 - 27 kann auch ein zweiter Monovibrator vorgesehen sein, dessen Eingang an die Leitung 17 oder den Ausgang 23 des Monovibrators 16 und dessen Ausgang an die Basis des Transistors 28 angeschlossen ist, wobei die Impulsdauer des zweiten Monovibrators ein Bruchteil der Impulsdauer des Monovibrators 16 ist und beispielsweise 15 ms beträgt.

Der Elektromagnet 21 kann anstelle der Klappe der Münzrückgabeeinrichtung auch ein Organ der Münzprüf- oder Münzkassiereinrichtung betätigen. Beispielsweise kann der Elektromagnet die pendelnd gelagerte Wand des Münzkanals nach der CH-PS 588 746 in die arretierte Lage ziehen, wobei der Monovibrator 16 durch ein Signal der das Durchlaufen einer Münze anzeigenden Vorrichtung auszulösen wäre.

RK/eb-6027
14.9.78

Patentansprüche
—————————————

1. Schaltungsanordnung zur Erregung eines Elektromagneten in
einem Münzfernsprecher, welche aus der Teilnehmerleitung gespeist ist und nach Auslösung durch einen Auslöseimpuls einer
das Durchlaufen oder die Annehmbarkeit einer eingeworfenen
Münze anzeigenden Vorrichtung einen Stromimpuls an den Elektromagneten liefert, dessen Anker ein Organ der Münzprüf-, Münzrückgabe- oder Münzkassiereinrichtung aus einer Ruhestellung
gegen die Kraft einer Feder oder die Schwerkraft in eine
Arbeitsstellung zieht und während einer vorbestimmten Zeitdauer in dieser hält, dadurch gekennzeichnet, dass ein aus
der Teilnehmerleitung (3) gespeister Speisestromkreis (1, 2)
eine höhere Spannung an einen ersten Teil (11, 31) und eine
niedrigere Spannung an einen zweiten Teil (15, 14) einer Impulserzeugungsschaltung (12) liefert, die nach Auslösung
durch den Auslöseimpuls (a) einen ersten, kürzeren, zum Anziehen des Ankers ausreichenden Impuls (d) der höheren Spannung und unmittelbar anschliessend einen zweiten, längeren, nur
zum Festhalten des Ankers ausreichenden Impuls (e) der niedrigeren Spannung mit der vorbestimmten Zeitdauer an den Elektromagneten (21) abgibt.

2. Schaltungsanordnung nach Anspruch 1, dadurch gekennzeichnet, dass die Impulserzeugungsschaltung (12) einen durch den Auslöseimpuls (a) auslösbaren Monovibrator (16) mit einem ersten (23) und einem zweiten Ausgang (18) hat, dessen (16) Zeitkonstante der Summe aus der Dauer des ersten (d) und zweiten Impulses (e) entspricht, dass der erste Ausgang (23) über ein CR-Glied (24 - 27), dessen Zeitkonstante die Dauer des ersten Impulses (d) bestimmt , einen Steuerstromkreis (28 - 30) für einen im Ruhezustand offenen, ersten Schalter (31) speist, der (31) einerseits an der ersten Spannung liegt und andererseits an die Spule des Elektromagneten (21) angeschlossen ist, und der zweite Ausgang (18) einen Steuerstromkreis (19) für einen im Ruhezustand offenen, zweiten Schalter (14) speist, der (14) einerseits an der zweiten Spannung liegt und andererseits über eine in Speisestromrichtung der Spule des Elektromagneten (21) gepolte Diode (20) an diese Spule angeschlossen ist.

3. Schaltungsanordnung nach Anspruch 1, dadurch gekennzeichnet, dass die Impulserzeugungsschaltung zwei durch den Auslöseimpuls auslösbare Monovibratoren hat, die Zeitkonstante des ersten Monovibrators der Dauer des ersten Impulses und die Zeitkonstante des zweiten Monovibrators der Summe aus der Dauer des ersten und zweiten Impulses entspricht, der erste Monovibrator einen ersten, im Ruhezustand offenen Schalter betätigt, der einerseits an der ersten Spannung liegt und andererseits an die Spule des Elektromagneten angeschlossen ist, und der zweite Monovibrator einen zweiten, im Ruhezustand offenen Schalter betätigt, der einerseits an der zweiten Spannung liegt und andererseits über eine Diode an die Spule des Elektromagneten angeschlossen ist.

4. Schaltungsanordnung nach einem der Ansprüche 2 oder 3, dadurch gekennzeichnet, dass die Schalter Transistoren (14, 31) sind.

5. Schaltungsanordnung nach einem der Ansprüche 1 - 4, dadurch gekennzeichnet, dass der Speisekreis (1, 2) einen ersten, an die Teilnehmerleitung (3) angeschlossenen Schaltungsteil (1), der die erste Spannung liefert und einen zweiten, vom ersten (1) gespeisten Schaltungsteil (2) hat, der die zweite Spannung liefert.

6. Schaltungsanordnung nach Anspruch 5, dadurch gekennzeichnet, dass der zweite Schaltungsteil (2) des Speisekreises (1, 2) ein Spannungsumformer mit geschalteten Transistoren ist, um einen maximalen Wirkungsgrad der Spannungsumformung zu erreichen.

RK/eb-6027
14.9.78

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | MACHINE DESIGN, Band 50, Nr. 2, 26. Januar 1978, Seiten 103,104 Cleveland, U.S.A. S.K. ROBERTS: "Increasing Solenoid Speed" <br><br> * Insgesamt * <br><br> -- | 1-4 |
| | US - A - 3 852 646 (MASON) <br><br> * Spalte 2, Zeilen 1-31; Spalte 4, Zeilen 12-52; Spalte 4, Zeile 62 - Spalte 5, Zeile 5; Spalte 5, Zeilen 23-38; Abbildungen 1,2 * <br><br> -- | 1,4 |
| | DE - A - 2 611 982 (TELDIX) <br><br> * Seite 2, Zeile 1 - Seite 3, Zeile 18; Abbildung 1 * <br><br> -- | 1 |
| | ELECTRONIC ENGINEERING, Band 47, Nr. 571, September 1975, Seiten 27,29 London, G.B. E. HORNER: "High Speed Solenoid Drive with Current Sensing" <br><br> * Seite 27, linke Spalte, Zeilen 10-18; Abbildung 3 * <br><br> -- | 1 |
| | FR - A - 2 312 144 (SIEMENS) <br><br> * Ansprüche 1-3; Abbildung * <br><br> -- | 1,5 |
| D | S.W. WAGNER: "Stromversorgung elektronischer Schaltungen und Geräte" 1964, R.v. Decker's Verlag G. Schenck ./. | |

Der vorliegende Recherchenbericht wurde für alle Patentansprüche erstellt.

| Recherchenort | Abschlußdatum der Recherche | Prüfer |
|---|---|---|
| Den Haag | 18-12-1979 | YOULE |

EPA form 1503.1 06.78

**KLASSIFIKATION DER ANMELDUNG (Int.Cl. 3)**

H 04 M 17/02
H 01 H 47/04
H 04 M 19/08

**RECHERCHIERTE SACHGEBIETE (Int. Cl. 3)**

H 04 M 17/00
       17/02
       19/06
       19/08
H 01 H 47/04
       47/22
       47/28
       47/30
       47/32

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| Kategorie | EINSCHLÄGIGE DOKUMENTE<br>Kennzeichnung des Dokuments mit Angabe, soweit erforderlich, der maßgeblichen Teile | betrifft<br>Anspruch | KLASSIFIKATION DER<br>ANMELDUNG (Int.Cl. 3) |
|---|---|---|---|
| | Hamburg, DE.<br>Seiten 492-496<br><br>  * Seite 492, Zeilen 4-25; Bilder<br>   7.2/66 und 7.2/68 *<br><br>-- | | |
| A | FR - A - 2 324 175 (SODECO)<br><br>  * Seite 1, Zeilen 1-23; Abbil-<br>   dung *<br><br>-- | 1 | |
| A | US - A - 3 760 101 (BURNS)<br><br>  * Spalte 7, Zeilen 11-25, 36-47;<br>   Abbildung *<br><br>-- | 1 | RECHERCHIERTE<br>SACHGEBIETE (Int. Cl. 3) |
| A | US - A - 3 646 575 (HEIRBAUT)<br><br>  Spalte 7, Zeilen 25-46; Ab-<br>  bildung 14 *<br><br>---- | 1 | |